# EUROPEAN PATENT SPECIFICATION

(11) **EP 2 431 634 B1**
(45) Date of publication and mention of the grant of the patent: **24.04.2013**
(21) Application number: 11181918.1
(22) Date of filing: 20.09.2011
(51) Int. Cl.: F16H 55/22, F16H 55/06

(54) **Worm drive**
Schneckenantrieb
Entraînement par vis sans fin

(30) Priority: 21.09.2010 JP 2010210936
(43) Date of publication of application: 21.03.2012
(73) Proprietor: JTEKT CORPORATION, Osaka-shi Osaka 542-8502 (JP)
(72) Inventor: Kikuchi, Arata, Osaka-shi,, Osaka 542-8502 (JP)
(74) Representative: Winter, Brandl, Fürniss, Hübner, Röss, Kaiser, Polte - Partnerschaft

(56) References cited:
- EP-A1- 2 230 071
- WO-A2-2008/000220
- WO-A2-2009/063186
- CH-A- 178 300
- US-A- 1 358 191
- US-A1- 2002 178 853

## Description

### BACKGROUND OF THE INVENTION

### 1. Field of the Invention

The invention relates to a worm drive.

### 2. Description of Related Art

An electric power steering apparatus is usually provided with a worm drive for transmitting output of an electric motor to a steering mechanism. For example, in Japanese Patent Application Publication No. 2006-194296 (JP-A-2006-194296), a worm drive includes a worm shaft connected to an electric motor and a worm wheel connected to a steering shaft. FIG. 6 shows the schematic configuration of a worm drive 100 similar to the worm drive described in JP-A-2006-194296; this figure shows the cross section perpendicular to the central axial line of the worm wheel (see JP-A-2006-194296, paragraphs [0029] and [0030] and FIGS. 7 and 8). Referring to FIG. 6, a worm shaft 101 is made from a metal, and a worm wheel 102 is constituted by an annular metal core 103 connected to a steering shaft or the like and a synthetic resin member 104 surrounding the outer circumference of the core 103. A tooth portion 104a meshing with the worm shaft 101 is formed on the outer circumference of the synthetic resin member 104.

Multiple involute splines 105 are formed on the outer circumference of the core 103, and the synthetic resin member 104 is joined to the splines 105.

However, the application of electric power steering apparatuses has been advanced to a large vehicle such as passenger cars with an engine displacement equal to or greater than 2000 cc, and in the large vehicle a load acting upon the worm drive increases. Thus, the output power of electric motor increases and torque transmitted from the electric motor to the worm wheel increases. For this reason, when the worm drive 100 is installed on the large vehicle, a large force F101 acts along the axial direction of the worm shaft 101 upon a tooth portion 104a of the worm wheel 102 in a meshing region 106 of the worm shaft 101 and the worm wheel 102. Therefore, the synthetic resin member 104 is strongly pressed against the spline 105 of the core 103 along the circumferential direction of the worm wheel 102.

As a result, a portion 104c, which is at the same position in the circumferential direction as the meshing region 106, of the inner circumferential portion 104b of the synthetic resin member 104 floats above the spline 105. This phenomenon occurs since the force suppressing the floating of the portion 104c of the synthetic resin member 104 is weak because of the tapered shape of the spline 105. Where such floating occurs, large bending (bending stress) occurs in the inner circumferential portion 104b of the synthetic resin member 104. From the standpoint of further increasing durability of the worm wheel 102, it is preferred that such a bending stress be as small as possible.

Accordingly, increasing the thickness (thickness in the axial direction) of the synthetic resin member 104 and increasing the elastic deformation amount of the synthetic resin member 104 can be considered as means for decreasing the bending stress of the synthetic resin member 104. Flotation of the inner circumferential portion 104b of the synthetic resin member 104 can thus be suppressed. However, where the thickness of the synthetic resin member 104 which has a linear expansion coefficient higher than that of metals is increased, the expansion/contraction amount of the synthetic resin member 104 caused by temperature variations increases. In this case, a backlash amount between the tooth portion 104a of the synthetic resin member 104 and the tooth portion 101a of the worm shaft 101 is difficult to maintain at an adequate value. Where the backlash is small, meshing resistance of the worm shaft 101 and worm wheel 102 tends to be large, and where the backlash becomes large, meshing noise (rattling sound) between the worm shaft 101 and worm wheel 102 may occur.

### SUMMARY OF THE INVENTION

With the foregoing in view, it is an object of the invention to provide a Worm drive that excels in durability and can suppress variations in performance caused by temperature variations.

According to one aspect of the invention, there is provided a worm drive including a worm shaft and a worm wheel, the worm wheel including an annular synthetic resin member having tooth portions meshing with the worm shaft and a core having an outside diameter portion joined to an inside diameter portion of the synthetic resin member, wherein the outside diameter portion of the core has joining tooth portions that protrude outward in a radial direction of the worm wheel and are joined to the inside diameter portion of the synthetic resin member, and each of the joining tooth portions includes a widening portion whose width in a circumferential direction of the worm wheel increases toward the outside in the radial direction. In this case, the joining tooth portions may be formed over the entire circumference of the outside diameter portion of the core, or the joining tooth portions may be formed in part of the outside diameter portion of the core.

With such a worm drive, when a force acting in the axial direction of the worm shaft is transmitted from the worm shaft to the tooth portions of the synthetic resin member of the worm wheel, the inside diameter portion of the synthetic resin member is pressed against the joining tooth portions of the core along the circumferential direction of the worm wheel. In this case, although the inside diameter portion of the synthetic resin member is displaced outward in the radial direction, while being elastically deformed, the inside diameter portion is caught on the widening portion, thereby restricting the outward displacement in the radial direction.

As a result, the synthetic resin member can be prevented from floating with respect to the core. Therefore, large bending deformation (bending stress) caused by floating of the synthetic resin member can be prevented from occurring in the synthetic resin member. As a result, durability of the worm wheel can be further increased through the reduction of load on the synthetic resin member. Further, durability of the synthetic resin member is not improved by increasing the thickness of the synthetic resin member (thickness in the axial direction of the worm wheel) and increasing the possible elastic deformation of the synthetic resin member. Therefore, the thickness of the synthetic resin member can be decreased and therefore the expansion/contraction amount of the synthetic resin member caused by temperature variations can be reduced. Thus, the backlash amount between the tooth portions of the synthetic resin member and the tooth portions of the worm shaft can be maintained at an adequate value. As a consequence, it is possible to realize the worm drive in which variations in performance caused by temperature variations have been suppressed.

It is also preferred that, in the aforementioned worm drive, the widening portion include a tapered portion in which the width increases continuously toward the outside in the radial direction. In this case, the inside diameter portion of the synthetic resin member is received by the widening portion, thereby making it possible to prevent more reliably the inside diameter portion of the synthetic resin member from displacing outward in the radial direction (that is, the occurrence of floating). Therefore, the occurrence of bending deformation in the synthetic resin member can be suppressed more reliably.

Further, it is also preferred that, in the aforementioned worm drive, an outer contour shape of each of the joining tooth portions include a curved shape, when viewed from an axial direction of the worm wheel. In this case, the occurrence of stress concentration in the inside diameter portion of the synthetic resin member caused by abutment of the joining tooth portions and the inside diameter portion of the synthetic resin member can be suppressed. As a result, a local load can be prevented from acting upon the inside diameter portion of the synthetic resin member. Therefore, durability of the worm wheel can be further increased.

It is also preferred that, in the aforementioned worm drive, the width of the widening portion increase stepwise toward the outside in the radial direction, and the outer contour shape of each of the joining tooth portions may be formed by a straight line, when viewed from the axial direction of the worm wheel. In this case, the inside diameter portion of the synthetic resin member is also received by the widening portion, thereby making it possible to prevent reliably the inside diameter portion of the synthetic resin member from displacing outward in the radial direction (that is, the occurrence of floating). Therefore, the occurrence of bending deformation in the synthetic resin member can be suppressed more reliably.

It is also preferred that, in the aforementioned worm drive, the outside diameter portion of the core have an identical cross-sectional shape in any cross section perpendicular to the axial direction of the worm wheel. With such a worm drive, the inside diameter portion of the synthetic resin member can be joined to the joining tooth portions at any position of the worm wheel in the axial direction of the worm wheel. Therefore, bending deformation of the synthetic resin member can be suppressed at any position of the worm wheel in the axial direction of the worm wheel. Further, the synthetic resin member can be formed by injection molding a molten synthetic resin in a die along the axial direction of the core in a state in which the core is inserted into the die. In this case, the molten synthetic resin can be caused to spread uniformly around the outside diameter portion of the core. Therefore, the worm wheel in which the inside diameter portion of the synthetic resin member is in gapless contact with the outside diameter portion of the core can be easily molded. Further, since the cross-sectional shape of the outside diameter portion of the core is constant, the outside diameter portion of the core can be easily formed by drawing or the like.

### BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:
FIG. 1 is a schematic diagram illustrating the schematic configuration of the electric power steering apparatus according to the first embodiment of the invention;
FIG. 2 is a partial sectional view illustrating the principal portions on the periphery of the worm drive shown in FIG. 1;
FIG. 3 is a magnified figure illustrating the periphery of the meshing region shown in FIG. 2;
FIG. 4 is a magnified figure illustrating the principal portions of the worm wheel shown in FIG. 3;
FIG 5 is a sectional view of the principal portions according to the second embodiment of the invention; and

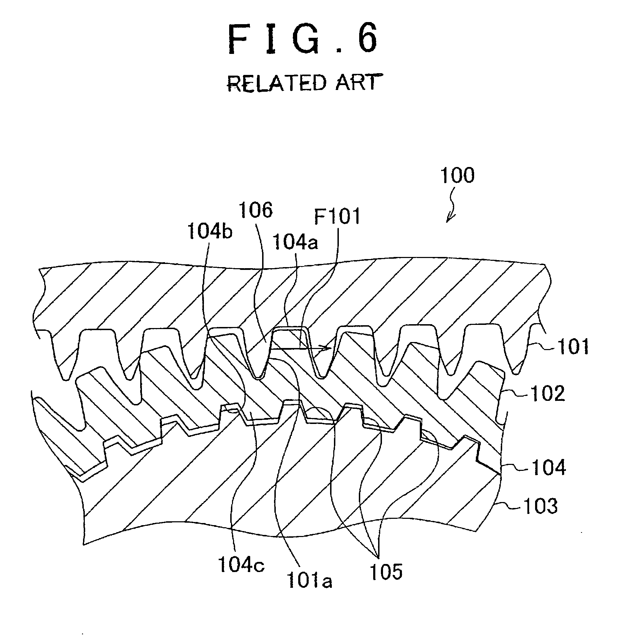

FIG. 6 is a sectional view of the principal portions of the worm drive for explaining the related art.

### DETAILED DESCRIPTION OF EMBODIMENTS

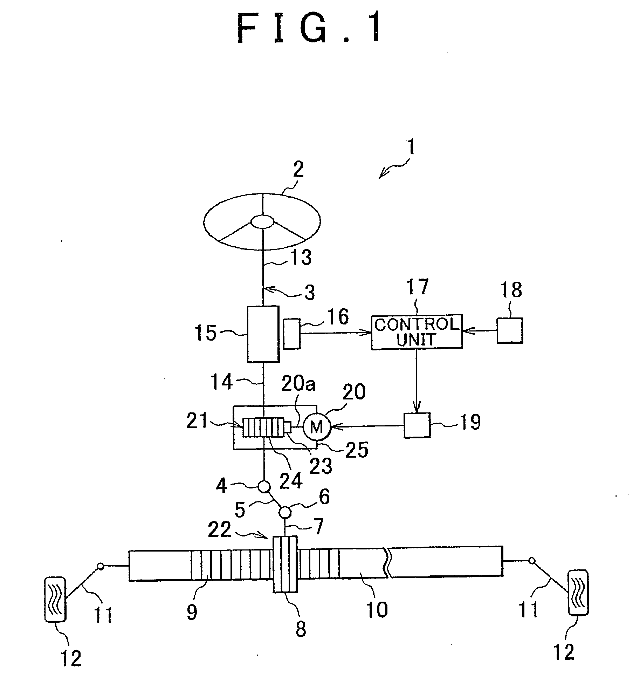

The preferred embodiments of the invention will be explained below with reference to the appended drawings. FIG. 1 is a schematic diagram illustrating the schematic configuration of the electric power steering apparatus 1 according to the first embodiment of the invention. Referring to FIG. 1, the electric power steering apparatus 1 has a steering shaft 3 connected to a steering member 2 such as a steering wheel, an intermediate shaft 5 connected by means of a universal joint 4 to the steering shaft 3, a pinion shaft 7 connected by means of a universal joint 6 to the intermediate shaft 5, and a rack shaft 10. The rack shaft 10 forms a rack 9 that meshes with a pinion 8 provided at a distal end of the pinion shaft 7 and extends in the left-right direction of a vehicle.

Tie rods 11 are connected to respective ends of the rack shaft 10, and each tie rod 11 is connected to the corresponding steered wheel 12 by means of a corresponding knuckle arm (not shown in the figure). Where the steering member 2 is operated and the steering shaft 3 is rotated, this rotation is transmitted to the pinion 8 via the intermediate shaft 5 and the like and converted by the pinion 8 and the rack 9 into linear movement of the rack shaft 10 along the right/left direction of the vehicle. The steered wheels 12 are thus steered.

The steering shaft 3 has a first steering shaft 13 as an input shaft connected to the steering member 2 and a second steering shaft 14 as an output shaft connected to the universal joint 4. These first and second steering shafts 13, 14 are connected to each other on the same axis by means of a torsion bar 15. A torque sensor 16 is provided in the vicinity of the torsion bar 15. The torque sensor 16 detects a relative rotation displacement amount of the first steering shaft 13 and the second steering shaft 14 caused by torsion of the torsion bar 15. The detection signal of the torque sensor 16 is inputted in a control unit 17. The control unit 17 calculates a steering torque applied to the steering member 2 on the basis of the detection signal from the torque sensor 16. Then, the control unit 17 controls the drive of an electric motor 20 for steering assist by means of a driver 19 on the basis of the calculated steering torque and a vehicle speed detection signal from a vehicle speed sensor 18. As a result, the electric motor 20 is driven and the output rotation speed thereof is reduced by a worm drive 21 and transmitted to the second steering shaft 14. The power transmitted to the second steering shaft 14 is further transmitted by the intermediate shaft 5 and the like to a steering mechanism 22 including the rack shaft 10, tie rod 11, knuckle arm, and the like, to assist the steering performed by the driver.

The worm drive 21 includes the worm shaft 23 as a drive gear driven by the electric motor 20, the worm wheel 24 as a driven gear, and a housing 25 accommodating the worm shaft 23 and the worm wheel 24. The worm shaft 23 is connected to an output shaft 20a of the electric motor 20 so as to enable torque transmission. The worm wheel 24 meshes with the worm shaft 23. The worm wheel 24 is connected to the second steering shaft 14 so that the two can rotate integrally. The worm wheel 24 is connected to the steering mechanism 22 by means of the second steering shaft 14 and the intermediate shaft 5, and the like.

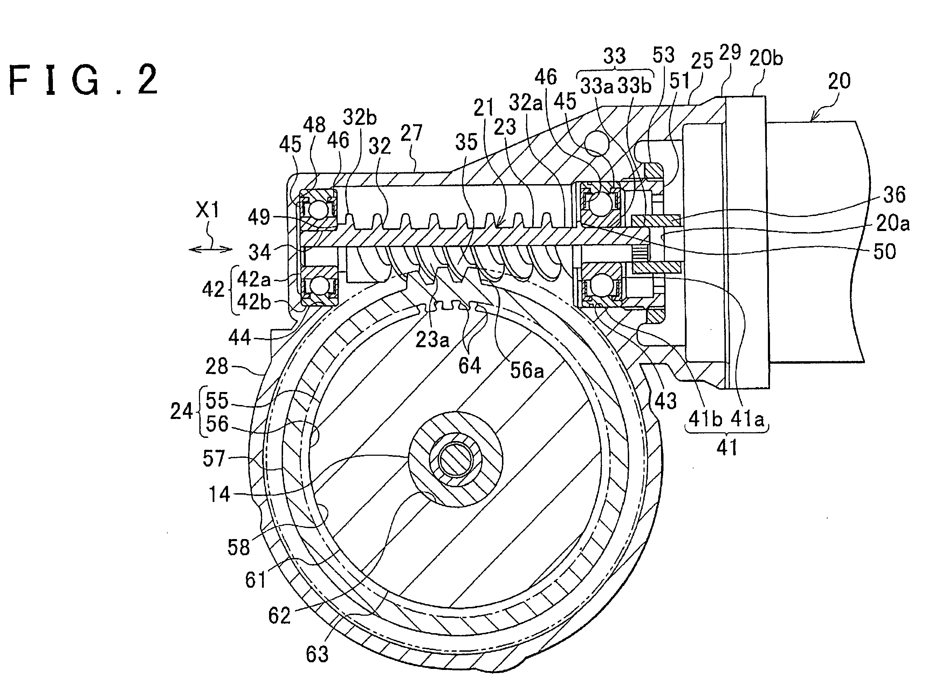

FIG. 2 is a partial sectional view illustrating the principal components located on the periphery of the worm drive 21 shown in FIG. 1. Referring to FIG. 2, the electric motor 20 includes the output shaft 20a and a motor housing 20b that rotatably supports the output shaft 20a. The motor housing 20b is fixed to the housing 25. The housing 25 is formed from an aluminum alloy. The housing 25 includes a tubular worm shaft accommodation section 27 that accommodates the worm shaft 23 and a worm wheel accommodation section 28 that accommodates the worm wheel 24.

A flange portion 29 is formed at one end of the worm shaft accommodation section 27. The motor housing 20b is fixed to the flange portion 29. The worm shaft 23 is formed, for example, using a metal such as iron. The worm shaft 23 includes a worm shaft main body 32 including tooth portions 23a meshing with the worm wheel 24 and a pair of support shafts 33, 34 extending respectively from a pair of end portions 32a, 32b of the worm shaft main body 32.

A meshing region 35 is provided in a substantially central portion of the worm shaft main body 32 with respect to the axial direction X1 of the worm shaft 23. The tooth portions 23a of the worm shaft 23 mesh with the tooth portions 56a of the worm wheel 24 in the meshing region 35. The support shaft 33 includes a bearing connection portion 33a adjacent to the worm shaft main body 32 and a joint connection portion 33b adjacent to the bearing connection portion 33a. The joint connection portion 33b is connected to the output shaft 20a of the electric motor 20 by means of the joint 36 such as a spline joint so that the joint connection portion and the output shaft can rotate integrally. First and second bearings 41, 42 that rotatably support the worm shaft 23 are provided at the bearing connection portion 33a of the support shaft 33 and the other support shaft 34, respectively.

The first bearing 41 and the second bearing 42 are constituted by sliding bearings such as ball bearings and disposed in the worm shaft accommodation portion 27. Inner races 41a, 42a of the first bearing and second bearing 41, 42 are fitted onto the corresponding support shaft 33, 34. An outer race 41b of the first bearing 41 is fitted onto a first bearing holding portion 43 formed in the worm shaft accommodation portion 27. An outer race 42b of the second bearing 42 is fitted onto a second bearing holding portion 44 formed in the worm shaft accommodation portion 27.

A preload is imparted to each of the first and second bearings 41, 42. More specifically, the outer race 42b of the second bearing 42 abuts on an annular step 48 formed at one end of the worm shaft accommodation portion 27, thereby performing positioning with respect to the axial direction X1. The inner race 42a of the second bearing 42 is received by an annular step 49 of the worm shaft 23. The inner race 41a of the first bearing 41 abuts on an annular step 50 of the worm shaft 23. The outer race 41b of the first bearing 41 is impelled toward the second bearing 42 side by a screw thread member 51 for preload adjustment.

The screw thread member 51 is threaded into the screw thread hole formed adjacently to the first bearing holding portion 43 of the housing 25, thereby imparting a preload to the first and second bearing 41, 42. A lock nut 53 is joined to the screw thread member 51 in order to fix the screw thread member 51 after preload adjustment. The worm wheel 24 has a metal core 55 that is fitted onto the second steering shaft 14 so as to enable integral rotation and disable relative movement in the axial direction and a synthetic resin member 56 provided integrally with the core 55 so as to surround the core 55.

The synthetic resin member 56 is formed by injection molding. The core 55 is inserted into the mold when the synthetic resin member 56 is injection molded, thereby integrally joining the synthetic resin member 56 and the core 55. The synthetic resin member 56 is formed in an annular shape. For example, PA66 (polyamide 66) can be used as the material of the synthetic resin member 56. The synthetic resin member 56 includes an outside diameter portion 57 having tooth portions 56a and an inside diameter portion 58.

A plurality of tooth portions 56a are provided equidistantly along the circumferential direction C1 of the worm wheel 24. The tooth portions 56a mesh with the tooth portions 23a of the worm shaft 23 in the meshing region 35, thereby transmitting a power between the worm wheel and the worm shaft 23. An appropriate backlash is provided between the tooth portions 23a of the worm shaft 23 and tooth portions 56a of the worm wheel 24, and meshing resistance of the two tooth portions 23a, 56a is decreased. By manufacturing the tooth portions 56a from a synthetic resin, it is possible to reduce the contact noise generated by meshing of the tooth portions 56a with the tooth portions 23a of the worm shaft 23.

The inside diameter portion 58 of the synthetic resin member 56 surrounds the core 55. The core 55 is integrally formed, for example, by drawing a metal material such as steel. The core 55 has an outside diameter portion 61 joined to the inside diameter portion 58 of the synthetic resin member 56 and an inside diameter portion 62. The inside diameter portion 62 is press fitted and fixed to the second steering shaft 14 of the steering shaft 3. The outside diameter portion 61 includes an outside diameter portion main body 63 and a plurality of first joining tooth portions 64 protruding from the outside diameter portion main body 63.

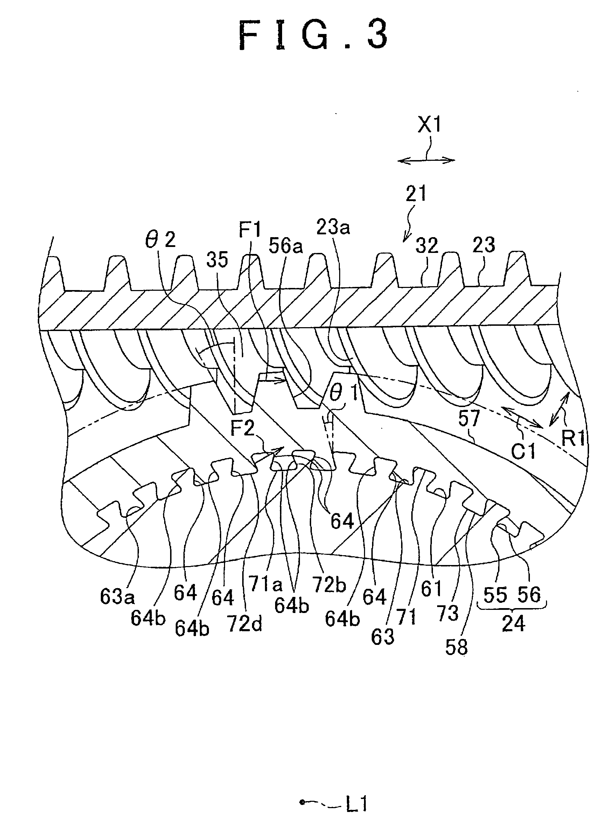

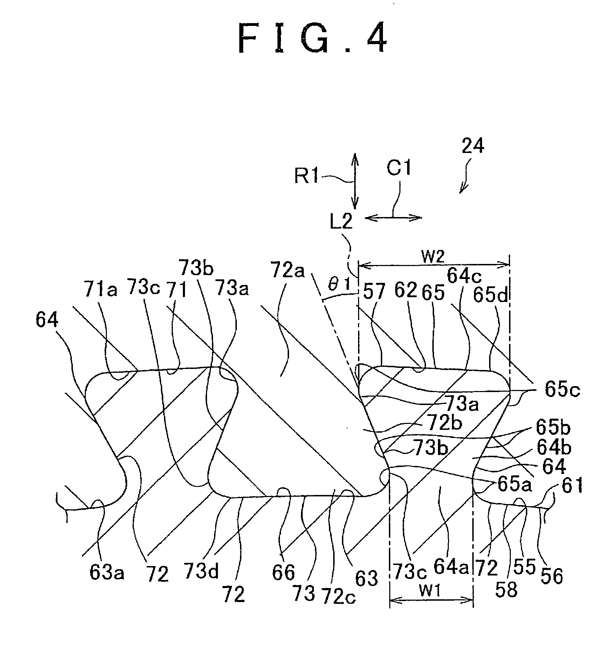

FIG. 3 is a magnified figure illustrating the periphery of the meshing region 35 shown in FIG. 2. FIG. 4 is a magnified figure illustrating the principal portions of the worm wheel 24 shown in FIG. 3. Referring to FIG. 3, an outer circumferential surface 63a of the outside diameter portion main body 63 of the core 55 is a cylindrical surface centered on a central axial line L1 (central axial line of rotation) of the worm wheel 24. The first joining tooth portions 64 protrude outward in a radial direction R1 from the outer circumferential surface 63a.

The first joining tooth portions 64 are provided to suppress floating of the synthetic resin member 56 with respect to the core 55. A plurality of first joining tooth portions 64 are provided equidistantly along the circumferential direction C1 (in FIG. 3, only some of the plurality of first joining tooth portions 64 are shown). As for the dimensions of each first joining tooth portion 64, for example, the height in the radial direction R1 of the worm wheel 24 is about several millimeters and the width in the circumferential direction C1 is about several millimeters. The arrangement pitch of the adjacent first joining tooth portions 64 in the circumferential direction C1 is about several millimeters.

With the abovementioned configuration, the first joining tooth portion 64 is shaped to be smaller than the tooth portion 56a of the synthetic resin member 56. Further, the number of the first joining tooth portions 64 is larger than the number of the tooth portions 56a of the outside diameter portion 57 of the synthetic resin member 56. Since all the first joining tooth portions 64 have the same shape, only one first joining tooth portion 64 will be mainly explained below.

The first joining tooth portions 64 may be formed over at least part of the outside diameter portion main body 63 of the core 55, in an axial direction of the worm wheel 24 (a direction perpendicular to the plane of FIG. 4) in FIG. 4. However, in the present first embodiment, the case is explained where the first joining tooth portions are formed over the entire circumference. The first joining tooth portions 64 have an identical cross-sectional shape in any cross section perpendicular to the axial direction of the worm wheel 24. The outer circumferential surface 63a of the outside diameter portion main body 63 has an identical cross-sectional shape in any cross section perpendicular to the axial direction of the worm wheel 24. Thus, the outside diameter portion 61 of the core 55 has an identical cross-sectional shape in any cross section perpendicular to the axial direction of the worm wheel 24.

The outside diameter portion 61 having such a shape can be formed by a single process of drawing the outside diameter portion of an intermediate body for manufacturing the core 55. The first joining tooth portion 64 has a substantially triangular shape, when viewed along the axial direction of the worm wheel 24. Further, the first joining tooth portion 64 has a shape symmetrical with respect to the circumferential direction C1. The first joining tooth portion 64 extends outward in the radial direction R1 from the outer circumferential surface 63a of the outside diameter portion main body 63 and includes a base end portion 64a, a widening portion 64b, and a distal end portion 64c. The base end portion 64a is connected to the outer circumferential surface 63a of the outside diameter portion main body 63. The widening portion 64b extends outward in the radial direction R1 from the base end portion 64a and the width thereof in the circumferential direction C1 increases continuously toward the outside in the radial direction R1. As a result, the base end portion 64a becomes a tapered portion.

Because of the abovementioned configuration, a width W1 of the base end portion 64a in the circumferential direction C1 is relatively small and a width W2 of the distal end portion 64c in the circumferential direction C1 is relatively large. The outer circumferential surface 65 of the first joining tooth portion 64 includes first portions 65a formed in the base end portion 64a, second portions 65b formed in the widening portion 64b, and third portions 65c and a fourth portion 65d formed in the distal end portion 64c.

The first portions 65a are formed to recede toward the inside of the first joining tooth portion 64 and are smooth concave curved surfaces. The second portions 65b are formed, for example, as flat surfaces. The second portion 65b and the radial direction R1 (straight line L2 passing through the central axial line L1 of the worm wheel 24) form a predetermined angle θ1, when viewed along the axial direction of the worm wheel 24.

Referring to FIG. 3, the angle θ1 of the second portion 65b may be larger than a pressure angle θ2 of the tooth portion 56a of the synthetic resin member 56, may be less than the pressure angle θ2, and may be equal to the pressure angle θ2. The effectiveness of preventing the synthetic resin member 56 from floating with respect to the core 55 increases with the increase in the angle θ1. Referring to FIG. 4, the third portions 65c are formed to protrude toward the outside of the first joining tooth portion 64 and are smooth convex curved surfaces. The fourth portion 65d is formed as a smooth circular-arc surface or flat surface and connected to the third portions 65c. With the above-described configuration, the outer contour (the outer circumferential surface 65) of the first joining tooth portion 64 has a smooth shape having no sharp portions and no discontinuous changes in curvature radius, for example, a curved shape, when viewed from the axial direction of the worm wheel 24. A groove 66 is formed between the first joining tooth portions 64 adjacent in the circumferential direction C1.

The more detailed configuration of the inside diameter portion 58 of the synthetic resin member 56 will be explained below. The inside diameter portion 58 includes an inside diameter portion main body 71 and a plurality of second joining tooth portions 72 protruding from the inside diameter portion main body 71 and joined to the first joining tooth portions 64. The second joining tooth portions 72 are provided to prevent, together with the first joining tooth portions 64, the synthetic resin member 56 from floating with respect to the core 55.

The second joining tooth portions 72 are disposed in corresponding grooves 66 (in FIG. 4, only some of the plurality of second joining tooth portions 72 are shown). The corresponding grooves 66 are filled with respective second joining tooth portions 72. Since the second joining tooth portion 72 have the same shape, only one second joining tooth portion 72 will be mainly explained below.

The second joining tooth portion 72 has a substantially triangular shape, when viewed along the axial direction of the worm wheel 24. Further, the second joining tooth portion 72 has a shape symmetrical with respect to the circumferential direction C1. The second joining tooth portion 72 extends inward in the radial direction R1 from the inner circumferential surface 71a of the inside diameter portion main body 71 and includes a base end portion 72a, a widening portion 72b, and a distal end portion 72c. The base end portion 72a is connected to the inner circumferential surface 71a of the inside diameter portion main body 71. The widening portion 72b extends inward in the radial direction R1 from the base end portion 72a and the width thereof in the circumferential direction C1 increases continuously toward the inside in the radial direction R1. As a result, the base end portion 72a becomes a tapered portion.

The inner circumferential surface 73 of the second joining tooth portion 72 includes first portions 73a formed in the base end portion 72a, second portions 73b formed in the widening portion 72b, and third portions 73c and a fourth portion 73d formed in the distal end portion 72c. The first portions 73a are formed to recede toward the inside of the second joining tooth portion 72 and are smooth concave curved surfaces. The second portions 73b are formed, for example, as flat surfaces. The third portions 73c are formed to protrude toward the outside of the second joining tooth portion 72 and are smooth convex curved surfaces. The fourth portion 73d is formed, for example, as a smooth circular-arc surface and connected to the third portions 73c. With the above-described configuration, the outer contour shape (shape of the inner circumferential surface 73) of the second joining tooth portion 72 has a smooth shape having no sharp portions and no discontinuous changes in curvature radius, for example, a curved shape, when viewed from the axial direction of the worm wheel 24. The inner circumferential surface of the synthetic resin member 56 and the outer circumferential surface of the core 55 are in surface contact over the entire range thereof. As a result, the inside diameter portion 58 of the synthetic resin member 56 and the outside diameter portion 61 of the core 55 are strongly joined together.

The operation of the worm wheel 24 will be explained below. Referring to FIG. 3, where the worm shaft 23 is rotated to one side in the rotation direction by the drive of the electric motor, the tooth portions 23a of the worm shaft 23 mesh with the tooth portions 56a of the worm wheel 24. In this case, the force F1 acting along the axial direction X1 of the worm shaft 23 is transmitted from the tooth portions 23a to the tooth portions 56a of the synthetic resin member 56 of the worm wheel 24. At this time, the second joining tooth portions 72d that are tooth portions in sites at the same position as the meshing region 35 with respect to the circumferential direction C1, within the inside diameter portion 58 of the synthetic resin member 56, are strongly pressed against the corresponding first joining tooth portions 64 of the core 55 along the circumferential direction C1.

At this time, a force F2 acts upon the portion around the second joining tooth portions 72d, within the inside diameter portion 58 of the synthetic resin member 56, so that this surrounding portion is displaced outward in the radial direction R1, while being elastically deformed. However, the widening portion 72b of the second joining tooth portion 72d is caught on the widening portion 64b of the first joining tooth portion 64. As a result, the outward displacement of the synthetic resin member 56 located in the vicinity of the second joining tooth portion 72d in the radial direction R1 is restricted. The worm wheel 24 also operates in the same manner as described hereinabove when the worm shaft 23 rotates to the other side in the rotation direction.

Consequently, when the electric motor 20 rotationally drives the worm shaft 23, since the outward displacement of the inside diameter portion 58 of the synthetic resin member 56 in the radial direction R1 with respect to the core 55 is restricted, the synthetic resin member 56 can be prevented from floating with respect to the core 55. Therefore, large bending deformation (bending stress) caused by floating of the synthetic resin member 56 can be prevented from occurring in the synthetic resin member 56. As a result, durability of the worm wheel 24 can be further increased through the reduction of load on the synthetic resin member 56. As a consequence, the allowed transmitted torque of the worm drive 21 can be further increased and therefore the electric motor 20 with a higher output can be used. As a result, the electric power steering apparatus 1 can be installed on a larger vehicle, without increasing the worm drive 21 in size.

Further, durability of the synthetic resin member 56 is not improved by increasing the thickness of the synthetic resin member 56 (thickness in the axial direction of the worm wheel 24) and increasing the possible elastic deformation of the synthetic resin member 56. Therefore, the thickness of the synthetic resin member 56 can be decreased and therefore the expansion/contraction amount of the synthetic resin member 56 caused by temperature variations can be reduced. Thus, the backlash amount between the tooth portions 56a of the synthetic resin member 56 and the tooth portions 23a of the worm shaft 23 can be maintained at an adequate value. As a consequence, it is possible to realize the worm drive 21 in which variations in performance caused by temperature variations have been suppressed. As a result, it is possible to suppress an excessively large meshing resistance between the worm shaft 23 and worm wheel 24 that is caused by excessive narrowing of the gap between the tooth portions 23a, 56a, or to suppress the occurrence of meshing noise (rattling sound) between the worm shaft 23 and the worm wheel 24 that is caused by excessive widening of the gap between the tooth portions 23a, 56a.

Further, the widening portion 64b of the first joining tooth portion 64 is formed in a tapered shape such that the width thereof in the circumferential direction C1 increases continuously toward the outside in the radial direction R1. In this case, a load on the surface of the second joining tooth portion 72 of the synthetic resin member 56 is received by the surface of the widening portion 64b of the first joining tooth portion 64, thereby making it possible to prevent more reliably the inside diameter portion 58 of the synthetic resin member 56 from displacing outward in the radial direction R1 (that is, the occurrence of floating). Therefore, the occurrence of bending deformation in the synthetic resin member 56 can be suppressed more reliably.

Further, the outer contour shape of the first joining tooth portion 64 includes a curved shape, when viewed from the axial direction of the worm wheel 24. As a result, the occurrence of stress concentration in the inside diameter portion 58 of the synthetic resin member 56 caused by abutment of the first joining tooth portions 64 of the core 55 and the second joining tooth portions 72 of the synthetic resin member can be suppressed. Therefore, a local load can be prevented from acting upon the inside diameter portion 58 of the synthetic resin member 56. As a result, durability of the worm wheel 24 can be further increased.

The outside diameter portion 61 of the core 55 has an identical cross-sectional shape in any cross section perpendicular to the axial direction of the worm wheel 24. As a result, the second joining tooth portion 72 of the inside diameter portion 58 of the synthetic resin member 56 can be joined to the first joining tooth portion 64 of the core 55 at any position of the worm wheel 24 in the axial direction of the worm wheel 24. Therefore, bending deformation of the synthetic resin member 56 can be suppressed at any position of the worm wheel 24 in the axial direction of the worm wheel 24.

The synthetic resin member 56 can be formed by injection molding a molten synthetic resin in a die along the axial direction of the core 55 in a state in which the core 55 is inserted into the die. In this case, the molten synthetic resin can be caused to spread uniformly around the outside diameter portion 61 of the core 55. Therefore, the worm wheel 24 in which the inside diameter portion 58 of the synthetic resin member 56 is in gapless contact with the outside diameter portion 61 of the core 55 can be easily molded. Further, since the cross-sectional shape of the outside diameter portion 61 of the core 55 is constant, the outside diameter portion 61 of the core 55 can be easily formed by drawing or the like.

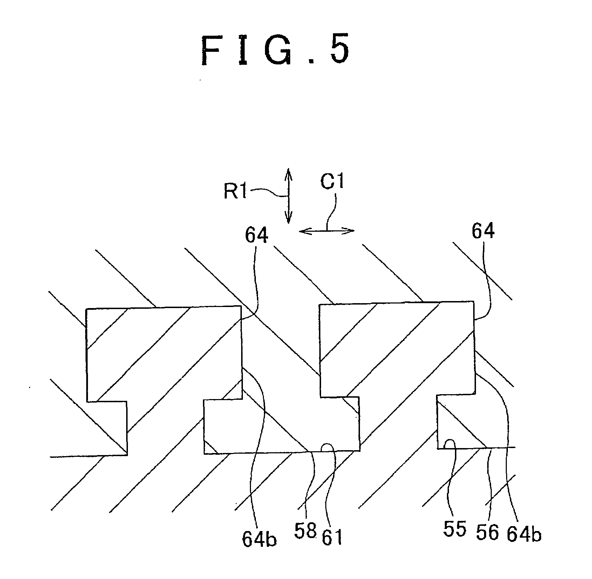

The invention is not limited to the contents of the above-described embodiments and can be changed variously. For example, the width of the widening portion 64b of the first joining tooth portion 64 in the circumferential direction C1 may increase in a stepwise manner toward the outside in the radial direction R1, as in the core 55 and the synthetic resin member 56 in the second embodiment of the invention illustrated by FIG. 5. In this case, the inner circumferential surface of the inside diameter portion 58 of the synthetic resin member 56 is shaped to follow the outer circumferential surface of the outside diameter portion 61 of the core 55.

Further, the cross-sectional shape of the outside diameter portion 61 of the core 55 of the worm wheel 24 perpendicular to the axial direction of the worm wheel 24 may differ depending on the position in the axial direction. Furthermore, the invention can be applied to apparatuses other than the electric power steering apparatus.

## Claims

1. A worm drive comprising a worm shaft (23), and a worm wheel (24) that includes an annular synthetic resin member (56) having tooth portions meshing with the worm shaft (23) and a core (55) having an outside diameter portion (61) joined to an inside diameter portion (58) of the synthetic resin member (56),
the outside diameter portion (61) of the core (55) having joining tooth portions (64) that protrude outward in a radial direction (R1) of the worm wheel (24) and are joined to the inside diameter portion (58) of the synthetic resin member (56), wherein
the outside diameter portion (61) of the core (55) has an identical cross-sectional shape in any cross section perpendicular to an axial direction of the worm wheel (24), **characterized in that**
each of the joining tooth portions (64) includes a widening portion (64b) whose width in a circumferential direction (C1) of the worm wheel (24) increases toward the outside in the radial direction (R1).

2. The worm drive according to claim 1, **characterized in that**
the joining tooth portions (64) are formed over an entire circumference of the outside diameter portion (61) of the core (55).

3. The worm drive according to claim 1, **characterized in that**
the joining tooth portions (64) are formed in part of the outside diameter portion (61) of the core (55).

4. The worm drive according to any one of claims 1 through 3, **characterized in that**
the widening portion (64b) includes a tapered portion in which the width increases continuously toward the outside in the radial direction (R1).

5. The worm drive according to any one of claims 1 through 4, **characterized in that**
an outer contour shape of each of the joining tooth portions (64) includes a curved shape, when viewed from an axial direction of the worm wheel (24).

6. The worm drive according to any one of claims 1 through 3, **characterized in that**
the width of the widening portion (64b) increases stepwise toward the outside in the radial direction.

7. The worm drive according to any one of claims 1 through 3 and 6, **characterized in that**
an outer contour shape of each of the joining tooth portions (64) is formed by a straight line, when viewed from an axial direction of the worm wheel (24).

## Patentansprüche

1. Ein Schneckentrieb mit einer Schneckenwelle (23) und einem Schneckenrad (24), das ein ringförmiges Kunstharzelement (56), das mit der Schneckenwelle (23) im Eingriff stehende Zahnabschnitte und einen Kern (55), der einen an einem Innendurchmesserabschnitt (58) des Kunstharzelements (56) angrenzenden Außendurchmesserabschnitt (61) aufweist, umfasst,
wobei der Außendurchmesserabschnitt (61) des Kerns (55) Verbindungszahnabschnitte (64), die in einer radialen Richtung (R1) des Schneckenrads (24) nach außen vorspringen und an dem Innendurchmesserabschnitt (58) des Kunstharzelements (56) befestigt sind, aufweist, wobei der Außendurchmesserabschnitt (61) des Kerns (55) in jedem Querschnitt senkrecht zu einer axialen Richtung des Schneckenrads (24) eine identische Querschnittsform aufweist, **dadurch gekennzeichnet, dass**
jeder der Verbindungszahnabschnitte (64) einen Verbreiterungsabschnitt (64b) umfasst, dessen Breite in einer Umfangsrichtung (C1) des Schneckenrads (24) in der radialen Richtung (R1) nach außen zunimmt.

2. Der Schneckentrieb nach Anspruch 1, **dadurch gekennzeichnet, dass** die Verbindungszahnabschnitte (64) über eine gesamte Umkreislänge des Außendurchmesserabschnitts (61) des Kerns (55) ausgebildet sind.

3. Der Schneckentrieb nach Anspruch 1, **dadurch gekennzeichnet, dass** die Verbindungszahnabschnitte (64) zum Teil durch den Außendurchmesserabschnitt (61) des Kerns (55) ausgebildet sind.

4. Der Schneckentrieb nach einem der Ansprüche 1 bis 3, **dadurch gekennzeichnet, dass** der Verbreiterungsabschnitt (64b) einen angeschrägten Abschnitt umfasst, in dem die Breite in der radialen Richtung (R1) nach außen kontinuierlich zunimmt.

5. Der Schneckentrieb nach einem der Ansprüche 1 bis 4, **dadurch gekennzeichnet, dass** eine äußere Konturform von jedem der Verbindungszahnabschnitte (64), aus einer axialen Richtung des Schneckenrades (24) betrachtet, eine gekrümmte Form umfasst.

6. Der Schneckentrieb nach einem der Ansprüche 1 bis 3, **dadurch gekennzeichnet, dass** die Breite des Verbreiterungsabschnitts (64b) in der radialen Richtung nach außen stufenweise zunimmt.

7. Der Schneckentrieb nach einem der Ansprüche 1 bis 3 und 6, **dadurch gekennzeichnet, dass** eine äußere Konturform von jedem der Verbindungszahnabschnitte (64), aus einer axialen Richtung des Schneckenrades (24) betrachtet, durch eine gerade Linie ausgebildet ist,

## Revendications

1. Entraînement à vis sans fin comprenant un arbre de vis sans fin (23), et une roue à vis sans fin (24) qui comporte un élément annulaire en résine synthétique (56) ayant des parties formant dents s'engrenant avec l'arbre de vis sans fin (23) et un noyau (55) ayant une partie de diamètre extérieur (61) reliée à une partie de diamètre intérieur (58) de l'élément en résine synthétique (56),
la partie de diamètre extérieur (61) du noyau (55) ayant des parties formant dents d'assemblage (64) qui font saillie vers l'extérieur dans une direction radiale (R1) de la roue à vis sans fin (24) et sont reliées à la partie de diamètre intérieur (58) de l'élément en résine synthétique (56), où
la partie de diamètre extérieur (61) du noyau (55) présente une forme transversale identique dans toute section transversale perpendiculaire à une direction axiale de la roue à vis sans fin (24),
**caractérisé en ce que**
chacune des parties formant dents d'assemblage (64) comporte une partie d'élargissement (64b) dont la largeur dans une direction circonférentielle (C1) de la roue à vis sans fin (24) augmente vers l'extérieur dans la direction radiale (R1).

2. Entraînement à vis sans fin selon la revendication 1, **caractérisé en ce que**
les parties formant dents d'assemblage (64) sont formées sur une circonférence entière de la partie de diamètre extérieur (61) du noyau (55).

3. Entraînement à vis sans fin selon la revendication 1, **caractérisé en ce que**
les parties formant dents d'assemblage (64) sont formées dans une partie de la partie de diamètre extérieur (61) du noyau (55).

4. Entraînement à vis sans fin selon l'une quelconque des revendications 1 à 3, **caractérisé en ce que**
la partie d'élargissement (64b) comporte une partie conique dans laquelle la largeur augmente de manière continue vers l'extérieur dans la direction radiale (R1).

5. Entraînement à vis sans fin selon l'une quelconque des revendications 1 à 4, **caractérisé en ce que**
une forme de contour externe de chacune des parties formant dents d'assemblage (64) comporte une forme courbée, lorsqu'elle est vue depuis une direction axiale de la roue à vis sans fin (24).

6. Entraînement à vis sans fin selon l'une quelconque des revendications 1 à 3, **caractérisé en ce que**
la largeur de la partie d'élargissement (64b) augmente progressivement vers l'extérieur dans la direction radiale.

7. Entraînement à vis sans fin selon l'une quelconque des revendications 1 à 3 et 6, **caractérisé en ce que**
une forme de contour externe de chacune des parties formant dents d'assemblage (64) est formée par une ligne droite, lorsqu'elle est vue depuis une direction axiale de la roue à vis sans fin (24).
